(19) Europäisches Patentamt
European Patent Office
Office européen des brevets

(11) **EP 2 293 494 A1**

(12) **EUROPÄISCHE PATENTANMELDUNG**

(43) Veröffentlichungstag:
**09.03.2011 Patentblatt 2011/10**

(51) Int Cl.:
***H04L 12/24*** *(2006.01)*

(21) Anmeldenummer: **10008136.3**

(22) Anmeldetag: **04.08.2010**

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**BA ME RS**

(30) Priorität: **04.09.2009 DE 102009040265**

(71) Anmelder: **Hirschmann Automation and Control GmbH**
**72654 Neckartenzlingen (DE)**

(72) Erfinder:
• **Niemann, Karl-Heinz, Dr.**
**30655 Hannover (DE)**
• **Schmerling, Oliver**
**31275 Lehrte (DE)**
• **Reister, Klaus**
**73265 Dettingen/Teck (DE)**

(74) Vertreter: **Greif, Thomas**
**Thul Patentanwaltsgesellschaft mbH**
**Rheinmetall Platz 1**
**40476 Düsseldorf (DE)**

(54) **Anordnung und Verfahren zur automatisierten Erfassung und nachfolgenden Verfügbarkeitsberechnung einer Netzwerkstruktur mit aktiven Vermittlungsknoten für industrielle Anwendungen**

(57)     Die Erfindung betrifft eine Anordnung, umfassend ein eine Netzwerktopologie bildendes Netzwerk mit über Datenleitungen verbundenen Netzwerkkomponenten und einen Rechner mit beliebigem Betriebssystem, auf dem eine Software zur Erfassung der Netzwerkkomponenten und der Netzwerktopologie gespeichert ist, sowie weiterhin umfassend eine weitere Komponente zur Berechnung der Netzwerkverfügbarkeit, wobei erfindungsgemäß vorgesehen ist, dass an das zu untersuchende Netzwerk (1) über eine Verbindung (2) ein Analysewerkzeug (3) angeschlossen ist und dieses Analysewerkzeug (3) aus einem Rechner und einer für diese Anordnung entwickelten und auf diesem Rechner gespeicherten Software besteht.

Fig. 13

**Beschreibung**

Die Erfindung betrifft eine Anordnung und ein Verfahren zur automatisierten Erfassung und nachfolgenden Verfügbarkeitsberechnung einer Netzwerkstruktur mit aktiven Vermittlungsknoten für industrielle Anwendungen, gemäß den Merkmalen des jeweiligen Oberbegriffes der unabhängigen Patentansprüche.

In industriellen Anlagen werden Komponenten zur Automatisierung der Anlagen in einem zunehmenden Maße über Netzwerke verbunden. Bei solchen Anlagen kann es sich z.B. um Anlagen der Automatisierungstechnik für fertigungstechnische oder verfahrenstechnische Prozesse handeln.

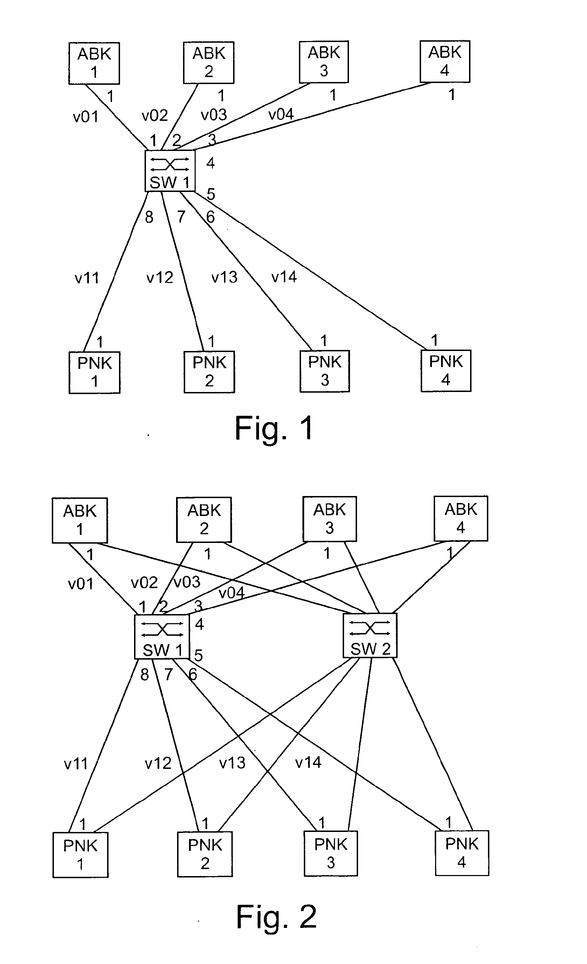

Figur 1 zeigt als Beispiel eine automatisierungstechnische Anlage, bei der das Netzwerk in einer Sterntopologie mit einem aktiven Vermittlungsknoten realisiert wurde. Hierbei kann es sich z.B. um ein ethernetbasiertes Netzwerk handeln, welches sogenannte Netzwerk-Switches als aktive Vermittlungsknoten verwendet. Hierbei sind die prozessnahen Komponenten (PNK1 bis PNK4), z.B. speicherprogrammierbare Steuerungen, über einen zentralen Vermittlungsknoten (Switch) (SW1) mit den Anzeige- und Bedienkomponenten (ABK1 bis ABK4) verbunden.

Die Verbindungen zwischen den Komponenten V1 bis V4 und V11 bis V14 können in verschieden Technologien ausgeführt sein. Z. B. können Kupferkabel, Glasfaserkabel, Lichtwellenleiter aus Kunststoff oder drahtlose Verbindungen zum Einsatz kommen.

Aus Figur 1 ist ersichtlich dass der zentrale Vermittlungsknoten SW1 eine kritische Komponente darstellt, bei deren Ausfall das gesamte System gestört ist

Bei derartigen automatisierungstechnischen Anlagen spielt die Verfügbarkeit des Netzwerks eine immer größere Rolle, da die Netzwerke für die Funktion von industriellen Anlagen essentiell sind. Störungen in der Netzwerkkommunikation führen in der Regel zu einer Abschaltung der Industrieanlage. Daher werden bezüglich der Verfügbarkeit immer höhere Anforderungen an die Netzwerke gestellt um eine hohe Verfügbarkeit der Anlage zu gewährleisten.

Aus diesem Grunde wird versucht, durch die technische Gestaltung des Netzwerkes Strukturen aufzubauen, die eine hohe Verfügbarkeit aufweisen. Hierzu werden diese Anlagen immer öfter mit redundanten Kommunikationssystemen ausgestattet, die den Ausfall eines Infrastrukturgerätes oder einer Verbindung ohne relevanten Datenverlust durch eine Umleitung des Datenverkehrs auf eine redundante Strecke kompensieren. Hierbei kommen verschiedene Strukturen zum Einsatz. Z. B. voll parallele Ausführung aller Netzwerkkomponenten, Ringtopologie oder vermaschte Topologie.

Figur 2 zeigt als Beispiel eine redundante Sterntopologie für ein Netzwerk mit nunmehr zwei aktiven Vermittlungsknoten. Hierbei kann es sich z.B. um ein ethernetbasiertes Automatisierungssystem handeln. Durch die redundante Ausführung der zentralen Vermittlungskomponente und die Doppelung der Verbindungen zwischen den zentralen Knoten und den Endgeräten des Netzwerkes und die redundante Ausführung der Switches und Kabelverbindungen kann im Störungsfall auf alternative Datenpfade umgeschaltet werden.

Figur 4 zeigt als ein weiteres Beispiel eine redundante Ringtopologie. Hier werden die Kommunikationsknoten (Switches) ringförmig miteinander verbunden, so dass weitere alternative Datenpfade entstehen, auf die bei einer Störung umgeschaltet werden kann.

Figur 5 zeigt als ein weiteres Beispiel ein so genanntes vermaschtes Netzwerk. Hier ist durch Zufügen weiterer alternativer Datenpfade die Möglichkeit zur Nutzung von Ausweichdatenpfaden weiter erhöht worden.

In der Literatur (Niemann, K.-H.: Vergleichende Untersuchung von Netzwerktopologien für Automatisierungssysteme. 4. Industrial Ethernet Kongress. 4.-5. Juli 2006. Stuttgart. Auf CD erschienen; Niemann, K.-H.: Überlegungen zur Topologie von Automatisierungsnetzwerken. Teil 1: Grundlagen und Stand der Standardisierung von Netzwerktopologien. In atp Automatisierungstechnische Praxis 9/2006. Oldenbourg Verlag, München, 2006, S. 50-56; Niemann, K.-H.: Überlegungen zur Topologie von Automatisierungsnetzwerken. Teil 2: Kosten und Performanceanalyse. In atp Automatisierungstechnische Praxis 10/2006. Oldenbourg Verlag, München, 2006, S. 64-72) gibt es vergleichende Betrachtungen, die auf qualitativer Basis die Zuverlässigkeit von verschiedenen Netzwerktopologien betrachten, die jedoch keine konkreten quantitativen Angaben über die Verfügbarkeit einzelner Strecken machen.

Für die Planung eines Netzwerkes ist es allerdings von hohem Interesse, quantitative Zahlen in Bezug auf die Verfügbarkeit von verschiedenen Netzwerktopologien zu erhalten, um so dem Planer oder Bediener (Administrator) Auswahlhinweise zur Planung eines Netzwerkes mit hoher Verfügbarkeit zu geben.

Spezielle Werkzeuge zur Berechnung der Verfügbarkeit von Automatisierungsnetzwerken mit aktiven Vermittlungsknoten stehen zur Zeit am Markt nicht zur Verfügung. Eine manuelle Berechnung der Verfügbarkeit ist nur für einfachste Strukturen ohne Vermaschungen in endlicher Zeit zu leisten und scheidet daher aus Aufwands- und Fehlergründen für größere Netzwerke aus. Darüber hinaus ist die Sammlung der für eine Verfügbarkeitsberechung erforderlichen Zuverlässigkeitskenndaten sehr aufwendig und zeitintensiv. Gleichzeitig ist die Berechnung der Verfügbarkeit dieser Netzwerke sehr komplex und daher fehleranfällig.

Im Folgenden werden zunächst einige grundlegende Begriffe der Zuverlässigkeitsrechnung eingeführt. Danach werden zunächst die Einzelkomponenten einer automatisierungstechnischen Anlage betrachtet, die dann über das Netzwerk zu einer Gesamtanlage verbunden werden.

Im Folgenden wird zunächst ein einzelnes Gerät, z. B. ein Netzwerk-Switch oder auch eine SPS (Speicherprogrammierbare Steuerung) betrachtet. Hierbei handelt es sich um ein elektronisches Gerät, welches funktionsfertig von einem Lieferanten bezogen werden kann. Dieses elektronische Gerät besteht in der Regel aus einer oder mehreren Leiterplatten sowie elektronischen Bauelementen und einem Gehäuse. Für die Definition der Zuverlässigkeit eines solchen Gerätes kann als Kenngröße die so genannte MTTF herangezogen werden. Für die MTTF wird eine über der Zeit konstante Fehlerrate $\lambda$ angenommen, wobei sich die MTTF dann aus der Gleichung berechnet

MTTF = 1 / $\lambda$

Die MTTF definiert eine statistische Zahl, welche den zeitlichen Abstand von Ausfällen eines Gerätes kennzeichnet. Die MTTF wird vom Hersteller eines Gerätes an Hand standardisierter Berechnungsverfahren ermittelt (z. B. MIL-HDBK-217, Telcordia-Standard). Für die Berechnung der MTTF eines Gerätes stehen Berechnungswerkzeuge zur Verfügung, die von verschiedenen Herstellern bezogen werden können. Exemplarisch sei hier das Werkzeug $\lambda$ Predict der Fa. Relia Soft genannt.

Wesentliche Einflussfaktoren für die Höhe der MTTF sind:

- Anzahl und Typ der Bauelemente.
- Einsatztemperatur
- Sonstige Umgebungsbedingungen.

Vereinfachend lässt sich sagen, dass die Fehlerrate $\lambda$ mit zunehmender Komplexität und zunehmender Temperatur ansteigt. Damit sinkt dann gleichzeitig die MTTF.

Typische MTTF-Werte für Netzwerkswitches liegen z. B. im Bereich mehrerer Jahre.

Als zweite wichtige Kenngröße wird nun der Begriff der MTTR eingeführt. MTTR ist die Abkürzung für den Begriff "Mean Time To Recover". Diese Zeit ist definiert als der durchschnittliche Zeitbedarf für die Reparatur oder den Austausch eines defekten Gerätes.

Die MTTR ist im Wesentlichen von der Serviceorganisation des Betreibers und ggf. des Herstellers ab. Wesentliche Einflussfaktoren sind z. B.:

- Zeitbedarf zum Auffinden des defekten Gerätes.
- Zeitbedarf zum Austausch /Reparatur des defekten Gerätes.
- Ggf. bei Austausch Beschaffungszeit für Ersatzteile sofern keine sofortige Reparatur möglich ist.

Typische MTTR-Werte liegen, abhängig von der Serviceorganisation des Anlagenbetreibers, im Bereich von Stunden bis Tagen.

Aus der MTTF und der MTTR kann die MTBF errechnet werden. Die MTBF ist die Abkürzung für den Begriff "Mean Time Between Failure" und definiert sich gemäß:

$$\text{MTBF} = \text{MTTF} + \text{MTTR}$$

Aus der MTBF und der MTTF lässt sich nun unter Verwendung der folgenden Formel die Verfügbarkeit eines einzelnen Gerätes bestimmen.

$$V = \frac{MTTF}{MTBF} = \frac{MTTF}{MTTF + MTTR} = \frac{\textit{Zeit fehlerfreier Betrieb}}{\textit{Gesamtzeit}}$$

Die Verfügbarkeit V kann Werte zwischen Null und Eins annehmen. Wie man aus dieser Formel ersehen kann, lässt sich eine hohe Verfügbarkeit dadurch erreichen, dass der Wert für die MTTF sehr groß sein muss in Relation zu MTTR, oder anders formuliert durch eine hohe Zuverlässigkeit der Geräte in Verbindung mit kurzen Austausch bzw. Reparaturzeiten.

Es wird im Weiteren davon ausgegangen, das die Verfügbarkeitszahlen für alle in einem System verwendeten Komponenten bekannt sind. Die hierfür erforderlichen MTTF-Zahlen stellt hierbei in der Regel der Lieferant der Geräte zur Verfügung, die MTTR Werte ergeben sich aus der Serviceorganisation des Anwenders.

Eine Automatisierungsanlage besteht in der Regel aus einer Vielzahl von einzelnen Geräten die über ein Netzwerk zu einer Anlage verbunden werden. Liegen zwischen zwei Endpunkten, die eine Kommunikationsbeziehung zueinander unterhalten, mehrere Geräte, so geht die Verfügbarkeit dieser Geräte in die Verfügbarkeit der Gesamtverbindung ein.

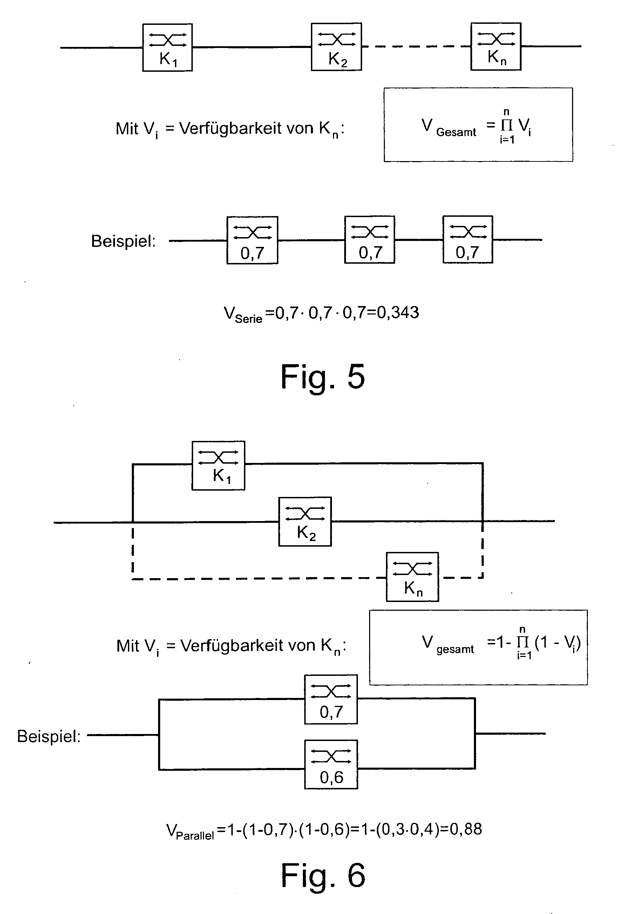

Figur 5 zeigt eine Hintereinanderschaltung (Reihenschaltung) von drei Netzwerk-Switches. Die Gesamtverfügbarkeit der Reihenschaltung berechnet sich aus dem Produkt der einzelnen Verfügbarkeiten. Dies leuchtet ein, da jeder der Switches in der Reihenschaltung ausfallen kann und somit der Ausfall eines einzelnen Switches die Ausfallwahrscheinlichkeit der Gesamtanordnung erhöht. Wie man aus Figur 5 entnehmen kann, ist die resultierende Verfügbarkeit der Reihenschaltung geringer als die der einzelnen Komponenten.

Figur 6 zeigt das Berechnungsverfahren zur Berechnung der Verfügbarkeit einer Parallelschaltung. Wie man sehen kann, steigt durch die parallele Anordnung die Gesamtverfügbarkeit der Anordnung. Diese Erhöhung wird beim Aufbau redundanter Netzwerkstrukturen verwendet. Durch die parallelen Pfade entstehen Alternativrouten, die bei Ausfall einzelner Komponenten verwendet werden können. Durch die Parallelschalung von Netzwerkpfaden erhöht sich die Verfügbarkeit der Anordnung.

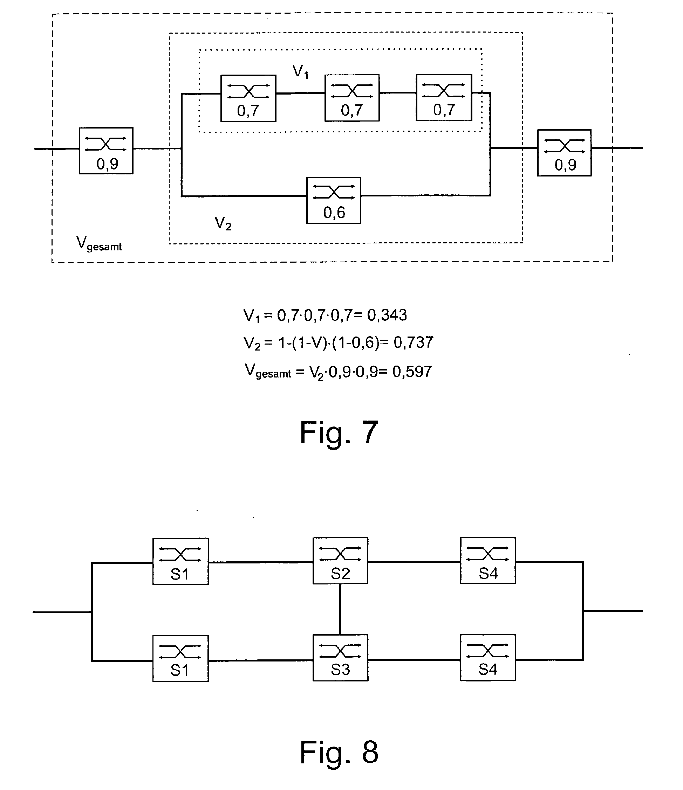

Figur 7 zeigt, dass man bei gemischten Topologien die Berechnungsverfahren für Reihen und Parallelschaltungen kombinieren kann um die Verfügbarkeit der Gesamtanordnung zu ermitteln.

Wie Figur 8 zeigt, versagt die Methode der Zuverlässigkeitsberechnung durch Auflösung von Reihen- und Parallelschaltungen bei vermaschte Schaltungen oder ringförmige Topologien. Diese lassen sich nicht in äquivalente Reihen- oder Parallelschaltungen auflösen. Allerdings kommen in der Automatisierungstechnik regelmäßig ringförmige oder vermaschte Topologien vor. Zur Berechnung derartiger Topologien müssen andere Verfahren der Zuverlässigkeitsrechnung eingesetzt werden.

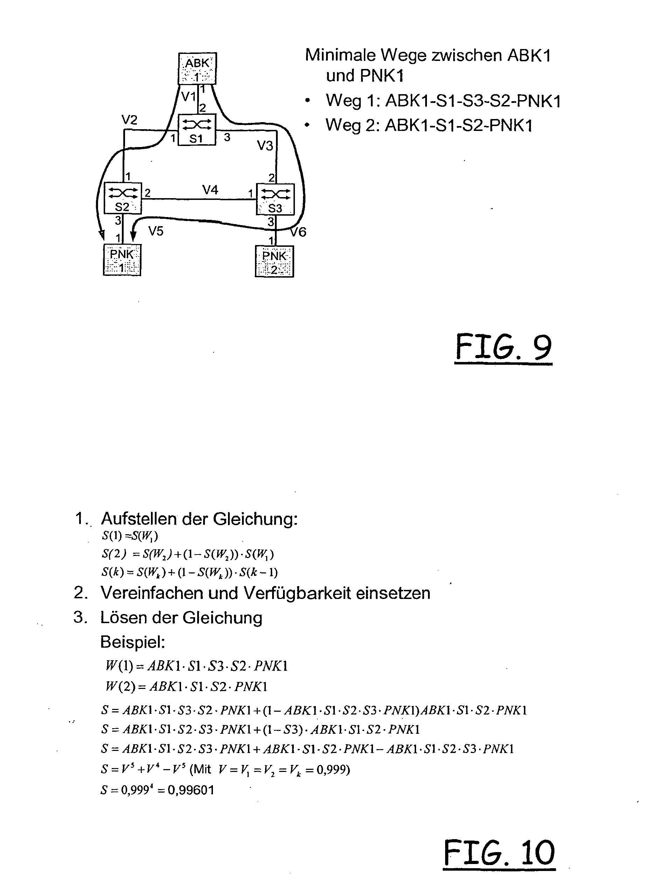

Gemäß einem solchen Verfahren werde die minimalen Wegen zwischen den zwei zu untersuchenden Punkten gesucht. Figur 9 zeigt als ein Beispiel ein ringförmiges Netzwerk. Es soll die Verfügbarkeit des Netzwerkes zwischen den Punkten ABK1 und PNK1 untersucht werden. ,Wie man sehen kann, stehen für den Austausch von Daten die Wege 1 und 2 zur Verfügung. Bei dieser Betrachtung ist es unerheblich, dass im ungestörten Betrieb eine der Ringverbindungen (z.B. V4) temporär unterbrochen ist und erst im Störfall aktiviert wird. Für die Verfügbarkeitsberechnung ist lediglich wichtig, dass die Verbindung im entscheidenden Augenblick durch entsprechende Algorithmen (z.B. Redundanz-Ring-Protokolle oder das Rapid Spanning Tree Protokoll) aktiv geschaltet sein wird.

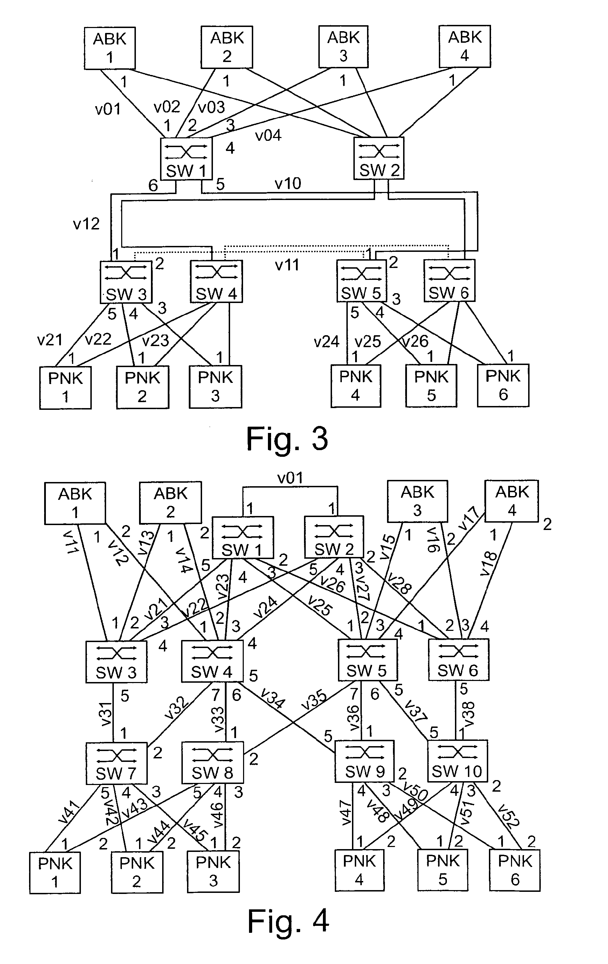

Figur 10 zeigt, wie man unter Anwendung eines solchen Verfahrens der minimalen Wege die Verfügbarkeit des Netzwerkes unter Berücksichtigung der beiden Wege bestimmen kann. Im Beispiel wird vereinfachend angenommen, dass alle Komponenten die gleiche Verfügbarkeit haben. Es ist zu erkennen, dass das Verfahren schon für ein einfaches Netz mit zwei möglichen Wegen zu entsprechend komplexen Systemgleichung S führt. Es ist einleuchtend, dass bei einem vermaschten Netzwerk, wie es z. B. Figur 4 gezeigt wird, die Komplexität der Systemgleichung drastisch zunehmen wird, da es eine Vielzahl von parallelen Wegen in einem derartigen Netzwerk gibt, die in die Systemgleichung eingehen.

Aus diesem Gunde ist eine fehlerfreie Berechnung der Verfügbarkeit einer solchen Topologie von Hand mit endlichen, zeitlichen Aufwand nicht zu leisten. Eine Berechnung über ein automatisiertes Verfahren ist erforderlich.

Am Markt sind Lösungen für die Zuverlässigkeitsberechung allgemeiner technischer Zusammenschaltungen erhältlich (ReliaSoft Corporation (Hrsg.): Firmenbroschüre Blocksim 7. Download unter: http://www.reliasoft.com/pubs/blocksim7_brochure.pdf ReliaSoft Corporation, Worldwide Headquarters, 1450 South Eastside Loop Tucson, Arizona 85710-6703).

Diese weisen jedoch mehrere Nachteile auf:

- Die zu untersuchende Topologie muss manuell in das Berechnungswerkzeug eingegeben werden. Dies bedeutet gerade bei komplexen Netzwerken mit tausenden von Netzwerkknoten einen hohen zeitlichen Aufwand und ein hohes Fehlerpotential durch Fehleingaben.

- Die zu untersuchende Topologie muss aus Dokumentationsunterlagen fehlerfrei und auf dem aktuellen Stand der Anlage ermittelt werden. Abweichungen zwischen den Dokumentationsunterlagen und dem real vorhanden Netzwerk werden nicht erkannt.

- Die marktgängigen Werkzeuge sind in der Regel nur durch speziell ausgebildetes Personal bedienbar. Der Hersteller bietet hierzu z. B. spezielle Trainingskurse an.

- Das diesen Werkzeugen zu Grunde liegende Verfahren basiert häufig auf der Monte Carlo Simulation. Das bedeutet, dass die Ergebnisse ein technisches System mit Hilfe von Zufallsprozessen simulieren. Hier ist die Genauigkeit des Ergebnisses von der Dauer der Simulation abhängig.

- Die MTTF- und MTTR-Werte müssen für jede Komponente im System individuell eingegeben werden. Dies kann bei Netzwerken mit tausenden von Netzknoten einen erheblichen Aufwand bedeuten.

- Die MTTF und MTTR-Angaben für alle in einem System eingesetzten Komponenten müssen von de Lieferanten bzw. Betreibern erfragt werden.

Zusammenfassend lässt sich sagen, dass für die Berechnung der Verfügbarkeit von Netzwerken mit aktiven Vermittlungsknoten zwar generell mit am Markt verfügbaren Berechnungswerkzeugen bewerkstelligen lässt, der damit verbundene zeitliche Aufwand für Eingabe der Netzwerkkomponenten, der Netzwerktopologie und der Zuverlässigkeitskennzahlen, gerade bei großen Netzwerken, unverhältnismäßig groß wird.

Der Erfindung liegt daher die Aufgabe zugrunde, eine Anordnung und ein Verfahren zur automatisierten Erfassung und nachfolgenden Verfügbarkeitsberechnung einer Netzwerkstruktur mit aktiven Vermittlungsknoten für industrielle Anwendungen bereitzustellen, wodurch die eingangs beschriebenen Nachteile vermieden und der Einsatz solcher technischen Anlagen (Anordnungen) deutlich verbessert wird.

Diese Aufgabe ist durch die unabhängigen Patentansprüche gelöst.

Entsprechend der Anordnung ist erfindungsgemäß vorgesehen, dass an das zu untersuchende Netzwerk über eine Verbindung ein Analysewerkzeug angeschlossen ist und dieses Analysewerkzeug aus einem Rechner und einer für diese Anordnung entwickelten (dass heisst funktional ausgebildeten und geeigneten) und auf diesem Rechner gespeicherten Software besteht.

Entsprechend des Verfahrens ist erfindungsgemäß vorgesehen, dass an das zu untersuchende Netzwerk über eine Verbindung ein Analysewerkzeug angeschlossen wird und dieses Analysewerkzeug aus einem Rechner und einer für diese Anordnung entwickelten und auf diesem Rechner gespeicherten Software besteht, wobei die erfasste Netzwerktopologie an ein Berechnungsmodul des Rechners zur Verfügbarkeitsberechnung übergeben wird.

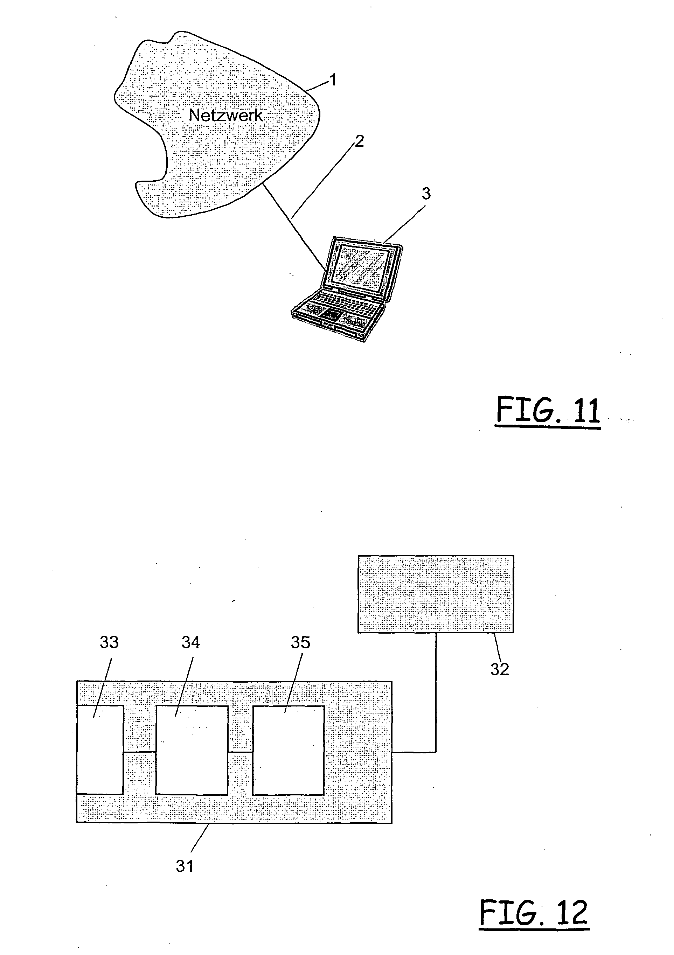

Um die vorstehend beschriebenen Nachteile bei der Berechnung der Netzwerkverfügbarkeit zu überwinden, wird die in Figur 11 gezeigte Anordnung vorgeschlagen.

An das zu untersuchende Netzwerk 1 wird über eine Verbindung 2 ein Analysewerkzeug 3 angeschlossen. Dieses Analysewerkzeug 3 besteht aus einem handelsüblichen PC oder Laptop und einer für diese Anordnung entwickelten Software.

Das Analysewerkzeug 3 in Figur 11 besteht aus einer Recheneinheit 31 und einen integrierten oder externen Bildschirm 32. Die Recheneinheit verfügt über eine Netzwerkkarte 33, so dass über die Verbindung 2 mit den Komponenten in dem zu untersuchenden Netzwerks 1 Daten ausgetauscht werden können (siehe auch Figur 12).

Die Software auf dem Analysewerkzeug 3 weist zunächst die folgende Funktionalität auf:

- Über das Modul 34 erfolgt unter Nutzung der Netzwerkkarte 33 eine automatisierte Erfassung aller an das Netzwerk 1 angeschlossenen Komponenten über die Verbindung mit dem Netzwerk 2
- Gleichzeitig erfolgt eine automatisierte Erfassung aller aktiven Vermittlungsknoten in dem Netzwerk 1 über die Verbindung 2 mit dem Netzwerk.

Netzwerkmanagementsysteme wie z.B. die Hirschmann-Software "Industrial HiVision" ermitteln z. B. Infrastrukturgeräte im Netzwerk mit Protokollen, wie z.B. ICMP oder SNMP und übernehmen somit die Funktionalität des Moduls 34. Die Infrastrukturgeräte selbst tauschen Informationen über die Topologie z.B. mittels Link Layer Discovery Protokoll aus und stellen diese Information über die integrierte Management Information Base (MIB) zur Verfügung. Ein Netzwerkmanagementsystem wie z.B. Industrial HiVision kann somit die Daten bezüglich der die Topologie des Netzwerkes auslesen, sammeln, speichern und grafisch darstellen.

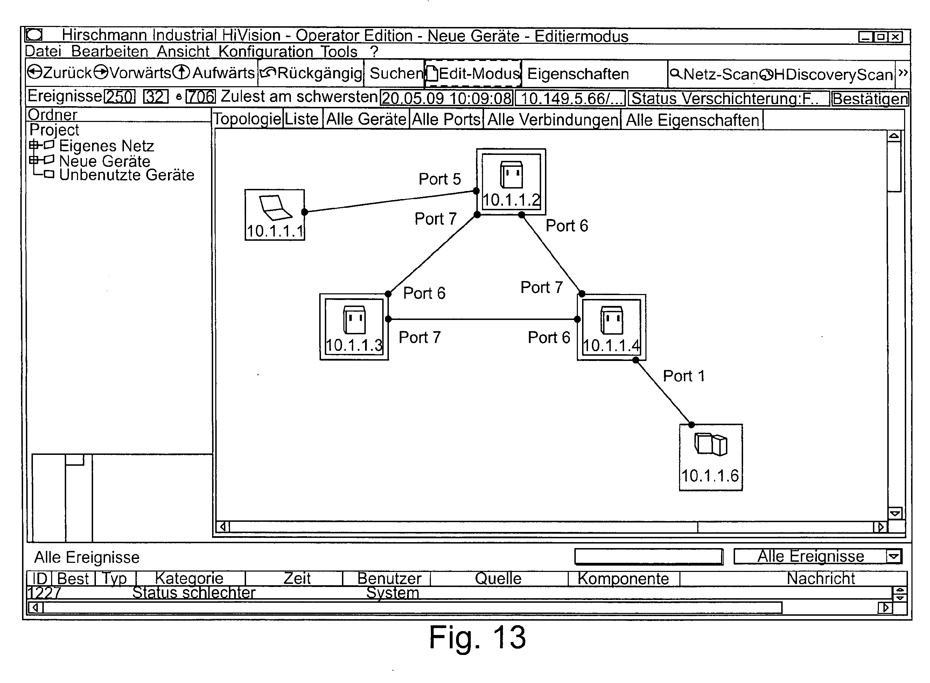

Figur 13 zeigt exemplarisch die Ansicht eines einfachen Netzwerkes, bestehend aus einem Laptop, einem PC und drei aktiven Vermittlungsknoten.

Die beschrieben Softwarefunktionalität wird erweitert um eine Funktionalität, bei der die Zuverlässigkeitskennzahlen (MTTF, MTTR) der Geräte bereits im Modul 34 hinterlegt werden und so nicht manuell eingegeben werden müssen. Alternativ kann man diese Kennzahlen auch aus den Geräten selber auslesen. Falls für bestimmte Gerätetypen keine Zuverlässigkeitskennzahlen im System hinterlegt wurden, können diese manuell eingegeben werden Für gleiche Gerätetypen können die Daten dabei vereinfacht über Clustermanagementfunktionen zugewiesen werden. Das gleiche gilt für die Zuverlässigkeitskennzahlen von Verbindungen wie z.B. Kupfer oder Glasfaserkabeln.

Die Netzmanagementsoftware 34 übergibt die gesammelten Daten an das Verfügbarkeitsberechnungsmodul 35, welches daraus die Verfügbarkeit berechnet und den Wert einschließlich Berechnung ausgibt und zusätzlich in geeigneter Weise speichert. Hierbei kann die Verfügbarkeit zwischen zwei beliebigen Punkten des Netzwerkes berechnet werden. Das Ergebnis wird entweder von dem Modul 35 dargestellt oder an das aufrufende Modul 34 übergeben und von diesem dargestellt, gespeichert und bei Bedarf ausgedruckt.

Netzwerkkomponente wird auch Gerät, Infrastrukturgerät oder ähnlich genannt.

Im Folgenden werden wesentliche und wichtige Aspekte der Erfindung noch einmal stichwortartig zusammengefasst:

Anordnung zur Erfassung der Netzwerktopologie und nachfolgenden Berechnung der Verfügbarkeit:

1. Die Anordnung aus einem handelsüblichen PC oder Laptop mit beliebigem Betriebssystem besteht, auf dem eine Software zur Erfassung der Netzwerkkomponenten und der Netzwerktopologie gespeichert ist und die weiterhin aus einer weiteren Komponente zur Berechnung der Netzwerkverfügbarkeit besteht.

2. Der PC kann mit einem beliebigen Betriebssystem z.B. Microsoft Windows oder Linux betrieben werden.

3. Die Anordnung ist an mindestens einer Stelle mit dem Netzwerk verbunden.

4. Die Art des Übertragungsmediums zwischen dem Netzwerk und dem PC ist beliebig (Glasfaser, Kupferkabel, Wirleless).

5. Die Anordnung erfasst, sammelt, speichert, zeigt grafisch an über bestimmte Dienste die Komponenten und Verbindungen im Netzwerk und druckt sie bei Bedarf aus.

6. Die erfasste Netzwerktopologie wird an ein Berechnungsmodul zur Verfügbarkeitsberechnung übergeben, welches auf dem gleichen Rechner arbeitet.

7. Das Berechnungsmodul berechnet aus den erfassten Netzwerkkomponenten und der erfassten Netzwerktopologie und mit im Gerät hinterlegten Zuverlässigkeitskennzahlen die Verfügbarkeit des Netzwerkes.

8. Die Berechnung der Verfügbarkeit des Netzwerkes kann zwischen zwei beliebigen Punkten erfolgen und das Ergebnis auf dem Bildschirm angezeigt und in zusätzlich auf dem Rechner gespeichert und bei Bedarf auf einem Drucker ausgedruckt werden.

9. Die Punkte, zwischen denen die Berechnung erfolgt, müssen keine Endpunkte sein, sondern können auch aktive Vermittlungsknoten sein.

10. Die Berechnung kann nur das Netzwerk oder aber auch das Netzwerk mit den daran angeschlossenen Komponenten (Endgeräten) umfassen.

11. Die Zuverlässigkeitsangaben der Netzwerkkomponenten und Endgeräte sind vom Hersteller im Werkzeug hinterlegt und müssen nicht manuell eingegeben werden.

12. Die Zuverlässigkeitsangaben der Netzwerkkomponente und Endgeräte können auch manuell eingegeben werden, sofern diese für bestimmte Geräte oder Geräteklassen nicht vom Hersteller der Software bereitgestellt wurden.

13. Die Zuverlässigkeitsangaben der Netzwerkkomponenten und Endgeräte können auch geändert werden, sofern dies vom Anwender gewünscht wird.

14. Manuell eingegebene oder geänderte Zuverlässigkeitskennzahlen können gespeichert werden und für spätere Berechnungen erneut zur Verfügung stehen.

15. Datensätze von Zuverlässigkeitsangaben von Geräten können mit der Softwareaktualisierung des Gerätes zusammen erweitert und/oder aktualisiert werden.

16. Diese Aktualisierung kann über Datenträger oder Internet oder einen sonstigen Weg erfolgen.

17. Datensätze von Zuverlässigkeitsangaben von Geräten können unhabhängig von der Softwareaktualisierung des Gerätes individuell erweitert und/oder aktualisiert werden.

18. Diese Aktualisierung kann über Datenträger oder Internet oder einen sonstigen Weg erfolgen.

19. Die Zuverlässigkeitsangaben der Netzwerkkomponenten und Endgeräte können auch aus den Geräten über das Netzwerk ausgelesen werden, sofern diese Geräte die entsprechende Funktionalität unterstützten.

20. Das untersuchte Netzwerk darf, aber nicht muss nicht aktive Vermittlungsknoten (z. B. Netzwerk-Switches oder Router) enthalten.

21. Die Anordnung kann auch in einem Offline-Modus, ohne Anschluss an das Netzwerk, betrieben werden, in dem die Netzwerktopologie manuell eingegeben werden kann.

22. Die Anordnung kann für diesen Fall einen textuellen oder grafischen Editor aufweisen, in den die Netzwerkkomponenten und die Netzwerktopologie eingegeben, bearbeitet, gespeichert und ausgedruckt werden können.

23. Die Anordnung kann bei nach einer Berechnung im Offline Betreib nachträglich die Übereinstimmung mit dem später realisierten Netzwerk prüfen und Abweichungen anzeigen, sofern zu einem späteren Zeitpunkt eine Verbindung zu dem realisierten Netzwerk hergestellt werden kann.

24. Die Anordnung kann optional in diesem Fall die Abweichung der Verfügbarkeit zwischen geplanter und realisierter Netzwerkverfügbarkeit berechnen.

25. Die Anordnung kann durch Anwahl eine Verfügbarkeitszahl ausrechnen, sofern man die vorhandene Netzwerktopologie redundant auslegt.

26. Die Anordnung kann nicht nur aus einem einzelnen Rechner, sondern auch aus einem Verbund von mehreren Rechnern zur Aufteilung der Rechenarbeit und damit zur Verkürzung der Rechenzeit bestehen.

27. Die Anordnung kann nicht nur aus einem einzelnen Rechner sondern auch aus einem Verbund von mehreren Rechnern bestehen, wobei die ermittelte Topologie von einem an das Netzwerk gekoppelten Rechner ermittelt und dann über eine Verbindung an einen anderen Berechnungsknoten zur Berechnung übergeben wird. Dieser Berechnet die Verfügbarkeitszahl und liefert das Ergebnis an den aufrufenden Rechner zurück (Client-Server-Pinzip)

28. Dieser Rechner (Server) kann zur Berechnung der Verfügbarkeit auch räumlich weit entfernt sein (Verbindung zum Server über Internet).

29. Die Bedienoberfläche der Anordnung kann mehrere Sprachen unterstützen.

30. Die Bedienungsanleitung ist in das Produkt so integriert, dass der Anwender diese auf dem Bildschirm des Analysewerkzeugs lesen kann.

31. Die Bedienungsanleitung kann mehrsprachig ausgeführt sein.

32. Die Sprache von Oberfläche und Bedienungsanleitung kann bei der Installation der Software oder im laufenden Betrieb gewählt werden.

## Patentansprüche

1. Anordnung, umfassend ein eine Netzwerktopologie bildendes Netzwerk mit über Datenleitungen verbundenen Netzwerkkomponenten und einen Rechner mit beliebigem Betriebssystem, auf dem eine Software zur Erfassung der Netzwerkkomponenten und der Netzwerktopologie gespeichert ist, sowie weiterhin umfassend eine weitere Komponente zur Berechnung der Netzwerkverfügbarkeit, **dadurch gekennzeichnet, dass** an das zu untersuchende Netzwerk (1) über eine Verbindung (2) ein Analysewerkzeug (3) angeschlossen ist und dieses Analysewerkzeug (3) aus einem Rechner und einer für diese Anordnung entwickelten und auf diesem Rechner gespeicherten Software besteht.

2. Anordnung nach Anspruch 1, **dadurch gekennzeichnet, dass** die Anordnung an mindestens einer Stelle mit dem Netzwerk (1) verbunden ist.

3. Anordnung nach Anspruch 1 oder 2, **dadurch gekennzeichnet, dass** das Analysewerkzeug (3) aus einer Recheneinheit (31) und einem integrierten oder externen Bildschirm (32) besteht, wobei die Recheneinheit (31) über eine Netzwerkkarte (33) verfügt, so dass über die Verbindung (2) mit den Netzwerkkomponenten in dem zu untersuchenden Netzwerk (1) Daten ausgetauscht werden können, wobei über ein Modul (34) unter Nutzung der Netzwerkkarte (33) eine automatisierte Erfassung aller in dem Netzwerk (1) untereinander angeschlossenen Netzwerkkomponenten und gleichzeitig eine automatisierte Erfassung aller aktiven Vermittlungsknoten in dem Netzwerk (1) über die Verbindung (2) mit dem Netzwerk (1) erfolgt.

4. Verfahren zur Verfügbarkeitsberechnung von Netzwerkkomponenten, basierend auf einer Anordnung, umfassend ein eine Netzwerktopologie bildendes Netzwerk mit über Datenleitungen verbundenen Netzwerkkomponenten und einen Rechner mit beliebigem Betriebssystem, auf dem eine Software zur Erfassung der Netzwerkkomponenten und der Netzwerktopologie gespeichert ist, sowie weiterhin umfassend eine weitere Komponente zur Berechnung der Netzwerkverfügbarkeit, **dadurch gekennzeichnet, dass** an das zu untersuchende Netzwerk (1) über eine Verbindung (2) ein Analysewerkzeug (3) angeschlossen wird und dieses Analysewerkzeug (3) aus einem Rechner und einer für diese Anordnung entwickelten und auf diesem Rechner gespeicherten Software besteht, wobei die erfasste Netzwerktopologie an ein Berechnungsmodul des Rechners zur Verfügbarkeitsberechnung übergeben wird.

5. Verfahren nach Anspruch 4, **dadurch gekennzeichnet, dass** das eine Recheneinheit (31) und einen integrierten oder externen Bildschirm (32) sowie eine Netzwerkkarte (33) aufweisende Analysewerkzeug (3) über die Verbindung (2) mit den Netzwerkkomponenten in dem zu untersuchenden Netzwerk (1) Daten austauscht, wobei über ein Modul (34) unter Nutzung der Netzwerkkarte (33) eine automatisierte Erfassung aller in dem Netzwerk (1) untereinander angeschlossenen Netzwerkkomponenten und gleichzeitig eine automatisierte Erfassung aller aktiven Vermittlungsknoten in dem Netzwerk (1) über die Verbindung (2) mit dem Netzwerk (1) erfolgt.

6. Verfahren nach Anspruch 4, **dadurch gekennzeichnet, dass** die Zuverlässigkeitskennzahlen (MTTF, MTTR) der Netzwerkkomponenten bereits in dem Modul (34) hinerlegt und ausgelesen werden.

7. Verfahren nach Anspruch 4, **dadurch gekennzeichnet, dass** die Zuverlässigkeitskennzahlen (MTTF, MTTR) aus den Netzwerkkomponenten ausgelesen werden.

8. Verfahren nach Anspruch 4, **dadurch gekennzeichnet, dass** die Zuverlässigkeitskennzahlen (MTTF, MTTR) der Netzwerkkomponenten manuell eingegeben werden.

Fig. 1

Fig. 2

Fig. 3

Fig. 4

Mit $V_i$ = Verfügbarkeit von $K_n$:

$$V_{Gesamt} = \prod_{i=1}^{n} V_i$$

Beispiel:

$$V_{Serie} = 0{,}7 \cdot 0{,}7 \cdot 0{,}7 = 0{,}343$$

# Fig. 5

Mit $V_i$ = Verfügbarkeit von $K_n$:

$$V_{gesamt} = 1 - \prod_{i=1}^{n} (1 - V_i)$$

Beispiel:

$$V_{Parallel} = 1 - (1-0{,}7) \cdot (1-0{,}6) = 1 - (0{,}3 \cdot 0{,}4) = 0{,}88$$

# Fig. 6

$V_1 = 0,7 \cdot 0,7 \cdot 0,7 = 0,343$

$V_2 = 1-(1-V) \cdot (1-0,6) = 0,737$

$V_{gesamt} = V_2 \cdot 0,9 \cdot 0,9 = 0,597$

# Fig. 7

# Fig. 8

Minimale Wege zwischen ABK1
und PNK1

- Weg 1: ABK1-S1-S3-S2-PNK1
- Weg 2: ABK1-S1-S2-PNK1

## FIG. 9

1. Aufstellen der Gleichung:

$$S(1) = S(W_1)$$
$$S(2) = S(W_2) + (1 - S(W_2)) \cdot S(W_1)$$
$$S(k) = S(W_k) + (1 - S(W_k)) \cdot S(k-1)$$

2. Vereinfachen und Verfügbarkeit einsetzen

3. Lösen der Gleichung

Beispiel:

$$W(1) = ABK1 \cdot S1 \cdot S3 \cdot S2 \cdot PNK1$$

$$W(2) = ABK1 \cdot S1 \cdot S2 \cdot PNK1$$

$$S = ABK1 \cdot S1 \cdot S3 \cdot S2 \cdot PNK1 + (1 - ABK1 \cdot S1 \cdot S2 \cdot S3 \cdot PNK1) ABK1 \cdot S1 \cdot S2 \cdot PNK1$$

$$S = ABK1 \cdot S1 \cdot S2 \cdot S3 \cdot PNK1 + (1 - S3) \cdot ABK1 \cdot S1 \cdot S2 \cdot PNK1$$

$$S = ABK1 \cdot S1 \cdot S2 \cdot S3 \cdot PNK1 + ABK1 \cdot S1 \cdot S2 \cdot PNK1 - ABK1 \cdot S1 \cdot S2 \cdot S3 \cdot PNK1$$

$$S = V^5 + V^4 - V^5 \text{ (Mit } V = V_1 = V_2 = V_k = 0,999)$$

$$S = 0,999^4 = 0,99601$$

## FIG. 10

Netzwerk

1

2

3

## FIG. 11

33    34    35

32

31

## FIG. 12

| ☐ Hirschmann Industrial HiVision - Operator Edition - Neue Geräte - Editiermodus | _ ◻ ✕ |
|---|---|

Datei  Bearbeiten  Ansicht  Konfiguration  Tools  ?

⊖Zurück⊕Vorwärts①Aufwärts ↩Rückgängig | Suchen ⬚Edit-Modus Eigenschaften | ⚲Netz-Scan◉HDiscoveryScan »

Ereignisse 250  32  ⊖ 706 Zulest am schwersten 20.05.09 10:09:08  10.149.5.66/...  Status Verschichterung:F..  Bestätigen

Ordner | Topologie Liste Alle Geräte Alle Ports Alle Verbindungen Alle Eigenschaften

Project
⊞▭ Eigenes Netz
⊞▭ Neue Geräte
└▭ Unbenutzte Geräte

Port 5
10.1.1.2
10.1.1.1
Port 7
Port 6
Port 6
Port 7
10.1.1.3
Port 7
Port 6
10.1.1.4
Port 1
10.1.1.6

Alle Ereignisse | | Alle Ereignisse ▽

| ID | Best | Typ | Kategorie | Zeit | Benutzer | Quelle | Komponente | Nachricht |
|---|---|---|---|---|---|---|---|---|
| 1227 | | | Status schlechter | | System | | | |

## Fig. 13

Europäisches
Patentamt

European
Patent Office

Office européen
des brevets

**EUROPÄISCHER RECHERCHENBERICHT**

**Nummer der Anmeldung**

EP 10 00 8136

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 7 426 554 B2 (KENNEDY JOHN G [US]) 16. September 2008 (2008-09-16) | 1,2,4 | INV. H04L12/24 |
| Y | * Spalte 1, Zeile 64 - Spalte 2, Zeile 39 * * Spalte 3, Zeile 10 - Spalte 12, Zeile 37 * * Abbildungen 1-6Q * ----- | 3,5-8 | |
| Y | US 6 003 090 A (PURANIK VINEETA [US] ET AL) 14. Dezember 1999 (1999-12-14) * Spalte 2, Zeile 58 - Spalte 6, Zeile 47 * * Spalte 7, Zeile 60 - Spalte 9, Zeile 65 * * Abbildungen 1-5H,8-10 * ----- | 3,5-8 | |
| A | US 6 735 548 B1 (HUANG JIANDONG [US] ET AL) 11. Mai 2004 (2004-05-11) * Spalte 2, Zeile 9 - Spalte 6, Zeile 15 * * Abbildungen 1-6 * ----- | 1-8 | |

| | | | RECHERCHIERTE SACHGEBIETE (IPC) |
|---|---|---|---|
| | | | H04L |

Der vorliegende Recherchenbericht wurde für alle Patentansprüche erstellt

| Recherchenort | Abschlußdatum der Recherche | Prüfer |
|---|---|---|
| München | 22. November 2010 | Bertsch, Andreas |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...............................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 10 00 8136

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-11-2010

| Im Recherchenbericht angeführtes Patentdokument | | Datum der Veröffentlichung | Mitglied(er) der Patentfamilie | Datum der Veröffentlichung |
|---|---|---|---|---|
| US 7426554 | B2 | 16-09-2008 | US 2003172150 A1 | 11-09-2003 |
| US 6003090 | A | 14-12-1999 | KEINE | |
| US 6735548 | B1 | 11-05-2004 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Nicht-Patentliteratur**

- **Niemann, K.-H.** Vergleichende Untersuchung von Netzwerktopologien für Automatisierungssysteme. *Industrial Ethernet Kongress,* 04. Juli 2006, vol. 4
- Überlegungen zur Topologie von Automatisierungsnetzwerken. Teil 1: Grundlagen und Stand der Standardisierung von Netzwerktopologien. **Niemann, K.-H.** Automatisierungstechnische Praxis. Oldenbourg Verlag, September 2006, 50-56
- Überlegungen zur Topologie von Automatisierungsnetzwerken. Teil 2: Kosten und Performanceanalyse. **Niemann, K.-H.** Automatisierungstechnische Praxis. Oldenbourg Verlag, Oktober 2006, 64-72